# EUROPÄISCHE PATENTSCHRIFT

(11) **EP 0 659 966 B1**
(45) Veröffentlichungstag und Bekanntmachung des Hinweises auf die Patenterteilung: **30.01.2002**
(21) Anmeldenummer: 94118258.6
(22) Anmeldetag: 19.11.1994
(51) Int. Cl.: E05B 65/36, B60R 25/10

(54) **Zentralverriegelung**
Central locking
Verrouillage central

(30) Priorität: 24.12.1993 DE 4344578
(43) Veröffentlichungstag der Anmeldung: 28.06.1995
(73) Patentinhaber: AGA Bauconsulting GmbH, 71364 Winnenden (DE)
(72) Erfinder: Zimmer, Hans-Joachim, 71549 Auenwald (DE)
(74) Vertreter: Lorenz, Werner, Dipl.-Ing.

(56) Entgegenhaltungen:
- EP-A- 0 595 019
- WO-A-93/17895
- DE-A- 3 836 026
- GB-A- 2 218 243
- US-A- 4 749 873
- US-A- 4 809 316
- US-A- 5 041 810

## Beschreibung

Die vorliegende Erfindung bezieht sich auf eine Zentralverriegelung nach der im Oberbegriff von Anspruch 1 näher definierten Art.

Aus der DE 38 36 026 C2 ist eine gattungsgemäße Zentralverriegelung für eine Mehrzahl von aktiven Funktionseinheiten und passiven Bestandteilen einer Gesamtanlage, wie z.B. eines Gebäudes, einer Produktionsanlage oder eines Kraftfahrzeuges bekannt, die mit einer Signaleingabeeinrichtung zur Ver- und Entriegelung mit den Funktionseinheiten und/oder in Anlagenbestandteilen gekoppelter, auf das Eingabesignal entsprechender Sperrglieder, versehen ist. Die Signaleingabeeinrichtung besteht hierbei aus einem von außen aktivierbaren Signalgenerator und einem Datenverarbeitungsgerät. Das Datenverarbeitungsgerät ist über eine serielle Schnittstelle und eine Busleitung mit den Funktionseinheiten und/oder Anlagenbestandteilen gekoppelt. Die Funktionseinheiten und/oder Anlagenteile weisen je einen vom Eingabesignal aktivierbaren Sende/Empfangsteil sowie je eine Decodier- und Ansteuerstufe für das implementierte Sperrglied auf, so daß in Abhängigkeit von einem als zulässig erkannten Eingabesignal die Funktionseinheiten und/oder Anlagebestandteile freigeschaltet oder verriegelt werden können.

Die in der DE 38 36 026 C2 offenbarte Erfindung bietet zwar einen guten Schutz gegen den Diebstahl von Fahrzeugen, würde jedoch beispielsweise die Magnetkarte oder der Fahrzeugschlüssel dem rechtmäßigen Eigentümer entwendet, so ist die Chance, das gestohlene Fahrzeug wieder aufzufinden, relativ gering, insbesondere dann, wenn es auf schnellstem Wege ins Ausland gebracht wird und sich somit außerhalb des Fahndungsbereiches der nationalen Polizeibehörden befindet.

Aus der GB-A-2 218 243 A ist ein weiteres Zentralverriegelungsystem bekannt, das ein Signal an eine fest installierte Basisstation ausstrahlt und das Fahrzeug in einen unfahrbaren Zustand versetzt, sobald das Zentralverriegelungssystem den Versuch eines Einbruchs am Fahrzeug bzw. eines Diebstahls des Fahrzeuges erkennt.

Bei Autodiebstählen tritt oftmals die Situation auf, daß der rechtmäßige Eigentümer aus relativ geringer Entfernung hilflos mit ansehen muß, wie gerade sein Fahrzeug gestohlen wird, ohne daß er eine Chance hat, aktiv etwas dagegen zu tun.

Der vorliegenden Erfindung liegt daher die Aufgabe zugrunde, eine Manipulation weitestgehend auszuschließen und die in der DE 38 36 026 C2 offenbarte Zentralverriegelung dahingehend zu verbessern, daß der Schutz der Zentralverriegelung auch auf ein bereits gestohlenes Fahrzeug ausgedehnt wird.

Erfindungsgemäß wird diese Aufgabe durch die im kennzeichnenden Teil von Anspruch 1 genannten Merkmale gelöst.

Durch das Vorsehen eines zusätzlichen Signalgebers, der bei Betriebsbereitschaft der Zentralverriegelung ein Zusatzsignal fortwährend ausstrahlt, kann von dafür vorgesehenen, am Straßenrand aufgestellten Empfängern, sehr schnell der Aufenthaltsort eines Fahrzeuges festgestellt und somit auch ein eventueller Versuch, das Fahrzeug schnellstmöglich ins Ausland zu schaffen, unterbunden werden, wenn der rechtmäßige Fahrzeugbesitzer den Verlust seines Fahrzeuges sofort meldet.

Das von dem Fahrzeug ausgestrahlte Zusatzsignal kann von den am Straßenrand aufgestellten Empfängern empfangen und somit, aufgrund des für jedes einzelne Fahrzeug spezifischen Signals, der momentane Standort des Fahrzeuges sofort ermittelt werden.

Durch das Einlesen des Zusatzsignales in das Datenverarbeitungsgerät ist sichergestellt, daß eine Manipulation der Zentralverriegelung unmöglich ist. Sollte es gelingen, die Funktion des zusätzlichen Signalgebers zu beeinträchtigen oder zu unterbinden, so daß kein Zusatzsignal mehr ausgestrahlt wird und daher auch kein Empfang desselben mehr möglich ist, können von dem Datenverarbeitungsgerät sämtliche Funktionseinheiten, wie beispielsweise die Einspritzpumpe des Motors, gesperrt werden, so daß ein Diebstahl des Fahrzeuges nur noch dann möglich ist, wenn das Fahrzeug beispielsweise auf einen Lkw verladen wird.

Das Zusatzsignal kann permanent ausgestrahlt werden um Energie zu sparen, kann aber auch vorgesehen sein, daß das Zusatzsignal diskontinuierlich oder in bestimmten Zeitabständen ausstrahlbar ist, so daß nicht permanent mit der vollen Sendeleistung gearbeitet werden muß und sich somit die Belastung der Fahrzeugbatterie in Grenzen hält.

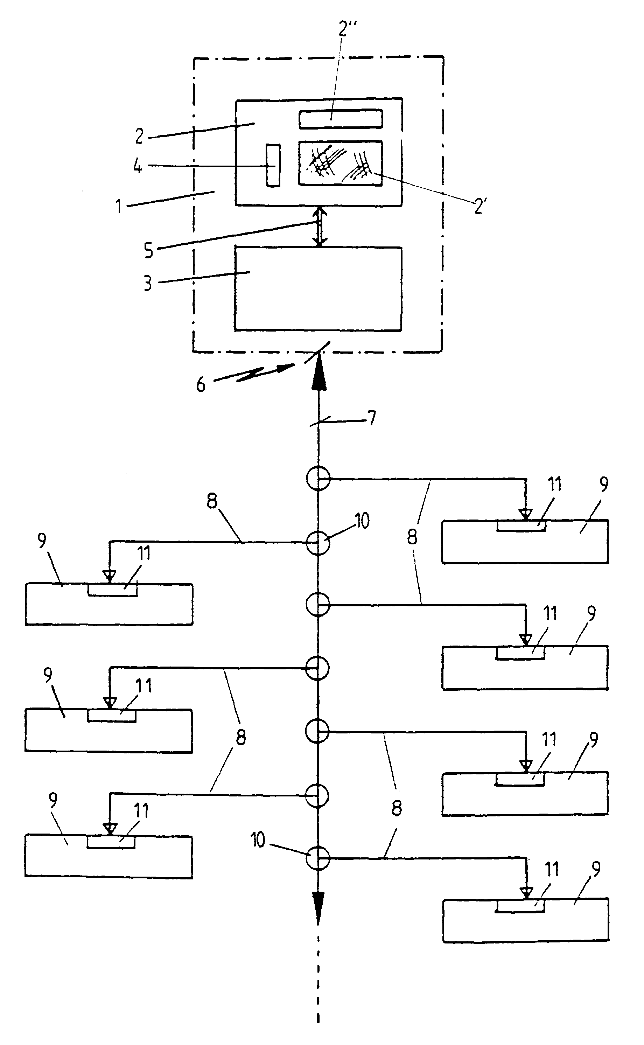

Weitere vorteilhafte Ausgestaltungen und Weiterbildungen der Erfindung ergeben sich aus den Unteransprüchen und dem nachfolgend anhand der Zeichnung beschriebenen Ausführungsbeispiel.

Die Figur zeigt eine Prinzipdarstellung der kompletten erfindungsgemäßen Zentralverriegelung.

Eine modulare Signaleingabeeinrichtung 1, welche ein Hauptsignal erzeugt, weist einen Signalgenerator 2 und ein Datenverarbeitungsgerät 3 auf. Des weiteren ist in der modularen Signaleingabeeinrichtung 1 ein zusätzlicher Signalgeber 4 vorhanden. Der Signalgenerator 2 und das Datenverarbeitungsgerät 3 sind über eine Kommunikationsleitung 5 miteinander gekoppelt über die Kommunikationsleitung 5 tauschen die genannten Einrichtungen der Signaleingabeeinrichtung 1 Signale und Daten untereinander aus.

Das Datenverarbeitungsgerät 3 weist ausgangsseitig eine serielle asynchrone Schnittstelle (z.B. RS232C) 6 auf, an die eine Busleitung 7 angeschlossen ist. Über die Busleitungen 7 und Steuerleitungen 8, die auch als Busleitungen ausgebildet sein können, sind die Signaleingabeeinrichtung 1 und die zu schützenden Funktionseinheiten und/oder mechanische Bestandteile 9 miteinander verbunden. Vorteilhaft ist die Busleitung 7 als elektrische Signalleitung oder als optische Signalleitung ausgebildet, so daß eine schnelle und sichere Datenübertragung gewährleistet ist. Die Funktionseinheiten und/oder mechanische Bestandteile 9 sind dabei jeweils über eine Verbindungsstelle 10 an die Busleitung 7 gekoppelt.

Wird über einen - nicht dargestellten - Sicherheitsschlüssel, einen - ebenfalls nicht dargestellten - Magnetkartencodierer und -leser oder eine Eingabetastatur 2' des Signalgenerators 2 ein Eingabesignal generiert, so wird dieses Eingabesignal gleichzeitig dem Datenverarbeitungsgerät 3 übermittelt und hier in einen der Schaltlogik des betreffenden Steuerkreises mit seiner Decodier- und Steuerstufe entsprechenden Code umgesetzt. Über dieses codierte Eingabesignal werden nun, und zwar über die Schnittstelle 6, die einzelnen Funktionseinheiten und/oder mechanische Bestandteile 9 angesteuert.

Dieses Umsetzen des codierten Eingabesignales in einen spezifischen Code für die Funktionseinheiten und/oder mechanische Bestandteile 9 erfolgt jedoch nur dann, wenn in das Datenverarbeitungsgerät 3 auch noch ein von dem zusätzlichen Signalgeber 4 ausgestrahltes Signal eingelesen wird. Es wird jedoch nicht nur das Signal selbst eingelesen, sondern auch die Feldstärke dieses Signals, so daß die Wahrscheinlichkeit nahezu Null ist, daß ein Autodieb zuerst den zusätzlichen Signalgeber 4 außer Betrieb setzt, zeitgleich einen eigenen Sender, der ein dem Zusatzsignal exakt entsprechendes Signal ausstrahlt, in Betrieb nimmt, und gleichzeitig dieses Signal auch noch mit einer genau vorherbestimmten Feldstärke ausstrahlt.

Durch die Kombination der genannten Maßnahmen läßt sich eine mit nahezu 100%iger Sicherheit arbeitende Wegfahrsperre erzielen. Die Sicherheit der erfindungsgemäßen Zentralverriegelung läßt sich noch zusätzlich erhöhen, wenn vorgesehen ist, daß nach dem Erkennen des spezifischen Eingabesignales des Besitzers des Fahrzeuges (über den Sicherheitsschlüssel, die Magnetkarte etc.) nicht sofort die Zünd- und Einspritzanlage entriegelt werden, sondern lediglich an den zusätzlichen Signalgeber 4 Spannung angelegt wird, so daß von diesem das Zusatzsignal ausgestrahlt werden kann. Erst nachdem der Empfang des Zusatzsignales in dem Datenverarbeitungsgerät 3 erkannt wurde, werden die Verriegelungselemente für die Einspritzpumpe und/oder andere elektronisch geregelte Bauteile im und am Motor entriegelt und der Motor kann gestartet werden.

Hierdurch kann Energie eingespart werden, da am zusätzlichen Signalgeber 4 nicht permanent Spannung anliegt.

Doch auch dann, wenn sich der Autodieb oder der widerrechtliche Benutzer über den Sicherheitsschlüssel oder die Magnetkarte unberechtigterweise Zugang zu dem Fahrzeug verschafft haben sollte, beispielsweise durch widerrechtliche Aneignung oder Diebstahl des Sicherheitsschlüssels oder der Magnetkarte, besteht die Möglichkeit, das Fahrzeug über das ausgestrahlte Zusatzsignal zu orten.

Hierbei kann das Zusatzsignal von einem Empfänger, welcher Teil eines flächendeckenden Empfängernetzes ist, empfangen und an eine zentrale Rechenanlage übermittelt werden, in welcher dann geprüft wird, ob das betreffende Fahrzeug als gestohlen gemeldet wurde. Als flächendeckendes Empfängernetz können hierfür beispielsweise vorhandene Sende- und Empfangsanlagen für Funktelefone eingesetzt werden.

In einer Weiterbildung der Erfindung könnte auch vorgesehen sein, daß das Fahrzeug noch einen zusätzlichen Empfänger aufweist, über den auf die Zentralverriegelung bzw. auf den Antrieb des Fahrzeuges Einfluß genommen werden kann, so daß beispielsweise beim Empfang eines entsprechenden Signales, welches das Fahrzeug als gestohlenes Fahrzeug ausweist, kein Treibstoff mehr in den Motor eingespritzt oder die elektrische Anlage stromlos gesetzt wird und das Fahrzeug daher zum Stehen kommt. Sind derartige Sender z.B. in Grenznähe angebracht, so können Grenzüberschritte auf einfache Weise verhindert werden.

Eine Möglichkeit, das von dem zusätzlichen Signalgeber 4 ausgestrahlte Zusatzsignal auch für andere Zwecke als zur Diebstahlsicherung und Ortung des Fahrzeuges zu verwenden, ist das Abbuchen von Straßenbenutzungsgebühren. Die Straßenbenutzungsgebühr kann über den Herstellercode verwaltet werden, d.h. der Fahrzeughersteller fordert die Straßenbenutzungsgebühr vom Autofahrer ein und leitet das Geld an eine zuständige Behörde weiter, ähnlich wie dies bei der Zinsabschlagsteuer der Fall ist, so daß ein ausreichender Datenschutz gewährleistet ist.

Hierbei wird von einem neben, über oder unter der Fahrbahnebene installierten Empfänger das Zusatzsignal empfangen und somit registriert, daß sich das Fahrzeug in einem bestimmten Streckenabschnitt befindet und diesen befährt. Diese Information kann an einen zentralen Rechner weitergeleitet werden, in welchem dann die Straßenbenutzungsgebühren für jedes Fahrzeug, beispielsweise monatlich, abgerechnet werden können.

Das zusätzlich ausgestrahlte Signal kann auch dazu dienen, daß eine Zentralstelle, z.B. bei einem Fuhrpark, stets darüber informiert wird, wo sich das Fahrzeug jeweils befindet.

Der Vollständigkeit halber soll zu der Figur noch nachgetragen werden, daß die Funktionseinheiten und/oder mechanische Bestandteile 9 eingangsseitig, d.h. bezüglich ihrer Verbindungsstelle 10 mit der abgehenden Steuerleitung 8, je einen Steuerkreis 11 aufweisen. In diesem Steuerkreis 11 werden einerseits das codierte Eingabesignal, das von dem Datenverarbeitungsgerät 3 ausgegebene Funktionssignal und ggf. ein Adressignal empfangen, und andererseits werden hier die Zustandssignale abgegeben. Durch die Abgabe eines Adressignales wird genau festgelegt, welche Funktionseinheit angesprochen werden soll.

Auf eine genaue Beschreibung der Funktionsweise der erfindungsgemäßen Zentralverriegelung hinsichtlich der Stellglieder und der Leitungen zu den Stellgliedern soll hier nicht eingegangen werden, da dies in der DE 38 36 026 C2 ausführlich beschrieben ist. Es soll an dieser Stelle nur erwähnt werden, daß Zünd- und Einspritzanlagen über je ein elektrisches Sperrglied und Motorhaube, Radiogehäuse, Kofferraum und Getriebe über je ein mechanisches Sperrglied ver- und entriegelbar sind. Als elektrische Sperrglieder können beispielsweise Haftrelais oder Schrittschaltrelais vorgesehen sein, und als mechanische Sperrglieder können Verriegelungsbolzen verwendet werden.

Prinzipiell ist es ausreichend, wenn der persönliche Code, der beispielsweise über einen Sicherheitsschlüssel oder eine Magnetkarte eingegeben wird, nur zum Entriegeln der Zentralverriegelung verwendet wird, da eine Verriegelung immer automatisch durch eine Unterbrechung des Ausstrahlens des Zusatzsignales erreicht wird, so daß beispielsweise beim Abschalten der Zündung und dem damit verbundenen Spannungsverlust des zusätzlichen Signalgebers 4 die Ausstrahlung des Zusatzsignales und somit auch der Empfang desselben unterbunden wird. Daher wird die Verriegelung mindestens in den für diesen Fall vorgesehenen Teilen, wie Benzineinspritzung und/oder Zündanlage, automatisch eingeleitet und vollzogen.

Durch diese Kombination, also den Sicherheitsschlüssel und die automatische Verriegelung, ist die Anlage auch als selbstschärfende Wegfahrsicherung im Sinne der Forderung der technischen Überwachungsvereine einzuordnen.

Dies bedeutet allerdings, daß vor jeder Inbetriebnahme des Kraftfahrzeuges, auch bei kurzem Halten an roten Ampeln oder geschlossenen Bahnschranken, wenn der Motor abgestellt und dabei die Anlage spannungslos gesetzt wird, der persönliche Code eingegeben werden muß. Erst durch diesen wird wieder das Zusatzsignal freigegeben, ausgestrahlt und empfangen und das Kraftfahrzeug kann wieder betriebsbereit gesetzt werden.

Auf Dauer ist es daher von Vorteil, bei kurzfristigen Stops des Fahrzeuges den Zündschlüssel nicht bis in Null-Stellung zu führen und somit die gesamte Elektrik außer Spannung zu setzen, sondern das Kraftfahrzeug aus der Stellung "Anlasser" heraus wieder in Betrieb zu nehmen.

Der restliche Teil der Zentralverriegelung kann auf verschiedene Art und Weise aktiviert, d.h. verriegelt, werden. Z.B. kann der restliche Teil der Anlage entweder beim Abschließen des Kraftfahrzeuges oder über einen Timer, der beim Ausschalten der Zündung in Gang gesetzt wird, nach einer voreingestellten Zeit verriegelt werden.

## Patentansprüche

1. Zentralverriegelung für eine Mehrzahl separater unterschiedlicher aktiver Funktionseinheiten oder passiver mechanischer Bestandteile (9) eines Kraftfahrzeugs, mit einer Signaleingabeeinrichtung (1), die ein Hauptsignal erzeugt, zur Ver- und Entriegelung von mit den Funktionseinheiten und/oder den mechanischen Bestandteilen (9) gekoppelten, auf ein dem jeweiligen Hauptsignal entsprechenden Eingabesignal ansprechenden elektrischen bzw. mechanischen Sperrgliedern, wobei
a) die Signaleingabeeinrichtung (1) aus einem extern aktivierbaren Signalgenerator (2) und einem Datenverarbeitungsgerät (3) besteht,
b) das Datenverarbeitungsgerät (3) über eine Signalleitung (7) mit den Funktionseinheiten und/oder den mechanischen Bestandteilen (9) gekoppelt ist,
c) die Funktionseinheiten und/oder mechanischen Bestandteile (9) je einen vom Eingabesignal aktivierbaren Empfangsteil, sowie je eine Decodier- und Ansteuerstufe für das implementierte Sperrglied aufweisen,
d) die Signalleitung als serielle Busleitung (7) ausgebildet ist,
e1) in Verbindung mit elektrischen Funktionseinheiten (9) als elektrische Sperrglieder Einrichtungen vorgesehen sind, die im Verriegelungszustand den Stromkreis für die Funktionseinheit unterbrechen und
e2) in Verbindung mit den mechanischen Bestandteilen (9) als mechanische Sperrglieder mechanische Einrichtungen zum Verriegeln und Entriegeln vorgesehen sind, wobei sowohl die elektrischen als auch die mechanischen Sperrglieder im Verriegelungszustand und im Entriegelungszustand spannungslos gehalten sind,
**dadurch gekennzeichnet, daß**
ein zusätzlicher Signalgeber (4) vorhanden ist, welcher bei Betriebsbereitschaft der Zentralverriegelung ein Zusatzsignal fortwährend ausstrahlt, wobei das ausgestrahlte Zusatzsignal auch von sich ggf. außerhalb des Kraftfahrzeuges befindlichen Empfängern empfangbar ist und wobei das ausgestrahlte Zusatzsignal derart in das Datenverarbeitungsgerät (3) einlesbar ist, daß eine Entriegelung nur bei ungestörter Ausstrahlung des Zusatzsignals ausgeführt bzw. aufrechterhalten wird.

2. Zentralverriegelung nach Anspruch 1,
**dadurch gekennzeichnet, daß**
die Feldstärke des Zusatzsignales in das Datenverarbeitungsgerät (3) einlesbar ist.

3. Zentralverriegelung nach Anspruch 1,
**dadurch gekennzeichnet, daß**
der Signalgenerator (2) über einen Schlüsselschalter, eine Eingabetastatur, einen Magnetkartenleser oder dergleichen aktivierbar ist.

4. Zentralverriegelung nach einem der Ansprüche 1 bis 3,
**dadurch gekennzeichnet, daß**
die Busleitung (7) als elektrische Signalleitung oder als optische Signalleitung ausgebildet ist.

5. Zentralverriegelung nach einem der vorhergehenden Ansprüche,
**dadurch gekennzeichnet, daß**
in das Datenverarbeitungsgerät (3) ein drittes Signal einlesbar ist, welches von einem von der Zentralverriegelung unabhängigen Sender ausgesendet ist.

6. Zentralverriegelung nach Anspruch 1,
**dadurch gekennzeichnet, daß**
das Zusatzsignal für die Abrechnung von Straßenbenutzungsgebühren einsetzbar ist.

## Claims

1. Central locking system for a plurality of separate different active functional units or passive mechanical components (9) of a motor vehicle, comprising a signal input device (1), which generates a main signal, for locking and unlocking electrical and/or mechanical blocking elements, which are coupled to the functional units and/or the mechanical components (9) and respond to an input signal corresponding to the respective main signal, wherein
a) the signal input device (1) comprises an externally actuable signal generator (2) and a data processing unit (3),
b) the data processing unit (3) is coupled by a signal line (7) to the functional units and/or the mechanical components (9),
c) the functional units and/or mechanical components (9) comprise one receiving part, which is actuable by the input signal, as well as one decoding and triggering module for each implemented blocking element,
d) the signal line takes the form of a serial bus cable (7),
e1) in combination with electrical functional units (9) as electrical blocking elements devices are provided, which in the locking state interrupt the circuit for the functional unit, and
e2) in combination with the mechanical components (9) as mechanical blocking elements mechanical devices are provided for locking and unlocking, wherein both the electrical and the mechanical blocking elements are kept de-energized in the locking state and in the unlocking state,
**characterized in that**
an additional signal generator (4) is provided, which, when the central locking system is ready for operation, continually emits an additional signal, wherein the emitted additional signal is receivable also by receivers optionally situated outside of the motor vehicle and wherein the emitted additional signal is readable into the data processing unit (3) in such a way that unlocking is effected and/or maintained only given undisturbed emission of the additional signal.

2. Central locking system according to claim 1,
**characterized in that**
the signal strength of the additional signal is readable into the data processing unit (3).

3. Central locking system according to claim 1,
**characterized in that**
the signal generator (2) is actuable via a key-operated switch, an input keypad, a magnetic card reader or the like.

4. Central locking system according to one of claims 1 to 3,
**characterized in that**
the bus cable (7) is designed as an electrical signal line or an optical signal line.

5. Central locking system according to one of the preceding claims,
**characterized in that**
a third signal, which is emitted by a transmitter independent of the central locking system, is readable into the data processing unit (3).

6. Central locking system according to claim 1,
**characterized in that**
the additional signal is usable for the deduction of road tolls.

## Revendications

1. Verrouillage centralisé pour une pluralité d'unités fonctionnelles actives ou d'organes mécaniques passifs (9), différents et séparés, d'un véhicule automobile, comprenant un dispositif d'entrée de signaux (1), qui produit un signal principal, pour le verrouillage et le déverrouillage d'éléments de blocage électriques ou mécaniques couplés aux unités fonctionnelles et/ou aux organes mécaniques (9) et qui répondent à un signal d'entrée correspondant au signal principal considéré, dans lequel
a) le dispositif d'entrée de signaux (1) est constitué par un générateur de signaux (2) pouvant être activé de l'extérieur et d'un appareil de traitement des données (3),
b) l'appareil de traitement des données (3) est couplé aux unités fonctionnelles et/ou aux organes mécaniques (9) par une ligne de signaux (7),
c) les unités fonctionnelles et/ou organes mécaniques (9) comportent chacun une partie réceptrice qui peut être activée par le signal d'entrée ainsi qu'un étage de décodage et de commande pour l'élément de blocage mis en oeuvre,
d) la ligne de signaux est constituée par une ligne bus série (7),
e1) il est prévu, comme éléments de blocage mécaniques, en combinaison avec des unités fonctionnelles électriques (9), des dispositifs qui, dans l'état de verrouillage, interrompent le circuit pour l'unité fonctionnelle, et
e2) il est prévu, comme éléments de blocage mécaniques, en combinaison avec les organes mécaniques (9), des dispositifs de verrouillage et de déverrouillage, les éléments de blocage électriques aussi bien que mécaniques étant maintenus hors tension dans l'état de verrouillage et dans l'état de déverrouillage,
**caractérisé en ce que**
il est prévu un générateur de signaux supplémentaire (4) qui diffuse en permanence un signal supplémentaire lorsque le verrouillage centralisé est prêt au service, le signal supplémentaire diffusé pouvant aussi être reçu par des récepteurs éventuellement situés en dehors du véhicule automobile et le signal supplémentaire diffusé pouvant être introduit dans l'appareil de traitement des données (3) de telle manière qu'un déverrouillage ne puisse être exécuté ou maintenu qu'en présence d'une diffusion non perturbée du signal supplémentaire.

2. Verrouillage centralisé selon la revendication 1,
**caractérisé en ce que**
l'intensité du champ du signal supplémentaire peut être introduite dans l'appareil de traitement des données (3).

3. Verrouillage centralisé selon la revendication 1,
**caractérisé en ce que**
le générateur de signaux (2) peut être activé au moyen d'un interrupteur à clé, d'un clavier d'entrée, d'un lecteur de cartes magnétiques ou similaires.

4. Verrouillage centralisé selon l'une des revendications 1 à 3,
**caractérisé en ce que**
la ligne bus (7) est constituée par une ligne de signaux électrique ou par une ligne de signaux optique.

5. Verrouillage centralisé selon l'une des revendications précédentes,
**caractérisé en ce que**
un troisième signal, qui est émis par un émetteur indépendant du verrouillage centralisé, peut être introduit dans l'appareil de traitement des données (3).

6. Verrouillage centralisé selon la revendication 1,
**caractérisé en ce que**
le signal supplémentaire peut être utilisé pour le règlement de taxes d'utilisation de voies publiques.
